Europäisches Patentamt

European Patent Office

Office européen des brevets

(11) Publication number: **0 341 359**
**A1**

## (12) EUROPEAN PATENT APPLICATION

(21) Application number: **88304348.1**

(22) Date of filing: **13.05.88**

(51) Int. Cl.4: **B63B 1/38**

The title of the invention has been amended (Guidelines for Examination in the EPO, A-III, 7.3).

(43) Date of publication of application:
**15.11.89 Bulletin 89/46**

(84) Designated Contracting States:
**DE FR GB IT**

(71) Applicant: **Blee, Leonard Jefferson**
**66 Leslie Avenue**
**Blair Athol South Australia(AU)**

(72) Inventor: **Blee, Leonard Jefferson**
**66 Leslie Avenue**
**Blair Athol South Australia(AU)**

(74) Representative: **JENSEN & SON**
**8 Fulwood Place High Holborn**
**London WC1V 6HG(GB)**

(54) **Marine hulls.**

(57) A marine hull (10) has a forebody (11), a transom (12), and a bottom (13) extending therebetween having walls defining a plurality of upwardly formed channels (14) between the forebody and the transom, the channels diverging in a rearward direction, air entry means near the front ends of the channels, and the rear ends of at least some of said channels opening at a peripheral edge of said bottom whereby water in these channels is free to discharge therefrom in a rearward and outward direction.

EP 0 341 359 A1

This invention relates to improvements in a marine hull, and is not necessarily limited to high speed hulls but the invention is particularly applicable thereto.

## BACKGROUND OF THE INVENTION

The most commonly used planing hulls for marine purposes have substantially constant dead rises aft of about station 4 or 5, in order to reduce the suction load which can occur with a "hooked" style of hull bottom. With a constant dead rise however the loading between the surface of the hull bottom and the water is usually positive for most of the length of the hull (that is, there is a kinetic energy imparted to the water due to deflection of the particles of water encountered by the hull bottom surface, having a downward component of movement. The trim angle is therefore critical). The pressure pattern however is much higher towards the forebody end of the hull than it is towards the aft end, and consequently most of the dynamic forces which are of use to the hull in ocean-going conditions occur over a relatively short length of the hull, probably not more than 15%. When the dynamic forces are relied upon (as in the usual case), the loading on the "low" side of the hull when deflected by a wave extends over a wider area and the loading on the "high" side extends over a lesser area. It is believed this is one of the limiting features of the standard constant dead rise type of planing hull. If however the loading is more evenly spread over the whole are of the hull, the difference is very much greater and there is a superior righting force.

In our Australian Patent Application 50872/85 entitled "Marine Hull" there is described and claimed a marine hull wherein the shape of the bottom included channels which diverged in a rearward direction, each channel having a surface of such shape that it intercepts and deflects water when the hull is mobile, the water so intercepted and deflected moving firstly upwardly and then rearwardly with respect to the hull, but being deflected downwardly by a concave surface and thereby imparting a vertical component of kinetic energy to the water reacting on the hull well aft of the normal maximum loading area. Experiments with sea-going craft have proved that the theories appear to be correct, and that a hull with such channels is much more stable under rough conditions than a conventional mono-hull type of craft.

With most hulls known to the applicant, there is a serious tendency to pound (hydraulically bottom) as the hull leaves one wave and impacts against the next. Although this pounding effect is worst with hulls having diverging bottom surfaces which are concave, it is nevertheless a serious disability with hulls having straight deadline shapes (in section) and even with those having convex deadline shapes. Even if the forebody is provided with a large dead rise angle, the pounding can still occur rearwardly of the normal area of maximum loading.

Craft made in accordance with the said Patent Application have proved that pounding is largely reduced but nevertheless there still remains a generally unresolved problem with planing hulls, and it is an object of this invention to provide further improvements whereby the tendency to pound can be substantially reduced, even further than with the hull design identified in the specification of said Australian application.

## PRIOR ART

In said Australian specification, an attempt was made to reduce pounding and Fig. 8 of that specification identified downwardly convex bottom portions 28 bridging channels, the portions 28 being provided with conduits 26 which allowed air to be drawn into the channels when the hull was in motion. However, the downwardly convex surfaces tended in many instances to become high load surfaces, and the apertures were not as effectual as was at first thought.

Further, in United States Patent Specification 4159691 of Rolland K. Paxton, there was disclosed in Fig. 9 an arrangement whereby a compressor caused a flow of air to a space below the hull bottom, in an attempt to introduce compressed air into the forward ends of tunnels, but this performed an entirely different function from the function which is disclosed by this invention.

Reference may also be made to Australian patent specifications 434155 (52238/69) and 437551 (18243/67) in the name of Chrysler Corporation.

## BRIEF SUMMARY OF THE INVENTION

In this invention a marine hull has a forebody, a transom, and a bottom extending therebetween having walls defining a plurality of upwardly formed channels between the forebody and the transom, the channels diverging in a rearward direction, air entry means near the front ends of the channels, and the rear ends of at least some of said channels opening at a peripheral edge of said bottom whereby water in these channels is free to discharge therefrom in a rearward and outward direction.

When the front ends of the channel are located near the forebody, the downwardly facing open channels allow air to enter the channels along with the water. Where a channel is submerged, a relatively low pressure area which exists beneath the hull when the hull is in motion through the water will induce a flow of air through the air entry means, or through an air flow aperture. In such an instance, air entry means could alternatively comprise "exit paths" between adjacent channels. That flow of air performs an important function of substantially reducing the suction load on the hull when the hull is moving, so that the negative effects of suction can be very substantially reduced and in some instances almost be eliminated. This is further assisted by the movement of water through the channels which also induces flow of air into the channels. There is in addition, a small reduction in the effective wetted surface because of the existence of the bubbles or particles of air. The air which is induced into that area will provide a "cushioning" effect which is found to be extremely useful in reducing pounding when the hull is used under adverse conditions.

The air performs a secondary function of allowing the water to flow upwardly into the channels and to be deflected downwardly by the channel walls. In the absence of air flow, the channels become "choked" with water which merely flows longitudinally through them, and the hull performance will be only marginally better than could be achieved with a conventional hard chine bottom.

Under some circumstances it is possible for water to enter a channel, or channels, in the hull bottom, and surge forwardly, to hydraulically hammer the channel walls at their front ends. This most often happens with a quarter to beam sea if the hull is moving slowly through the water, and the waves are high.

The invention can further include two facilities to limit this hydraulic hammering or thumping so that it is less disturbing than that produced by present monohulls.

Firstly, the front ends of the channels least likely to be affected have increased depth, providing "air cushion chambers". Secondly, exit paths can exist between adjacent channels near their front ends, and allow the forwardly moving water to move from lower into higher channels, from which that water can be readily redirected away from the hull.

The arrangement appears to be far more effective than that described in my previous Patent application, and is more effective than any other cushioning device known to the applicant.

Therefore, in an embodiment of this invention a marine hull bottom comprises walls defining an upwardly extending recess therein, the walls extending into the hull located between the forebody and transom of the hull, there being an aperture through a said recess wall, said aperture being in the lower portion of that wall, and further walls within the hull defining a passageway for air flow to the aperture from within the hull. The further walls can for example be the walls of a compartment having peripheral edges sealed with respect to the hull, the location of the compartment being over the recess and near or joined to the transom.

The invention is applicable to most hulls wherein an hydraulic lift effect is desirable. Obviously, if there is no divergance of channels, the running lines will be straight, there will be no upward, outward and downward deflection of the water particles, and the effect of the channels would be merely to assist the hull in "tracking", this arrangement being well known.

For low speed hulls, even if they are not planing hulls, some advantage is obtained due to the dynamic lift effect, and the angle of divergence from the central longitudinal plane can be as much as 45° (90° included angle) before the benefits cease to be viable. On the other hand, the invention can be of value in racing craft by providing lift near the transom, sometimes with a divergence angle as little as 3°. For commonly used runabout craft, the angle of divergence can be about 15°, as herein illustrated.

The invention has a number of advantages over the known prior art:-

(1) Air is more effectively introduced to the underside of the hull, reducing suction loads.

(2) The compartment walls function as a structural member which can assist in supporting the floor of the craft which embodies the hull.

(3) When the hull is at rest, the compartment may be allowed to fill or partly fill with water artifically increasing the mass of the hull at rest so that it is less sensitive to wave motion and by concentrating the buoyancy to the perimeter of the hull, gives greater stability against roll.

(4) Since the compartment is near the aft end of the hull, the distribution of the volume of water contained therein can be a means for determining the fore and aft trim of the hull.

(5) When transducers are to be mounted in the hull, if they are mounted in that portion of the hull which is beneath the compartment walls, mounting is greatly simplified and there is no need for sealing means which may otherwise prove to be unreliable.

(6) The compartment acts as a structural member of the transom and allows forces developed by an outboard motor to be directly spread over a large portion of the hull, instead of via the transom to the sides and bottom of the hull.

(7) The compartment allows the free passage of air from holes low in the transom to the apertures beneath the hull.

(8) If air is prevented from leaving the top of the compartment, then water is prevented from entering the compartment and the draught of the boat may be usefully reduced when required.

(9) Since life is applied over a large area of the hull bottom, the trim angle can be much less than in traditional planing hulls, or even negative, and this provides a great advantage when moving in rough water.

(10) Hydraulic hammering or thumping is greatly reduced.

## BRIEF DESCRIPTION OF THE DRAWINGS

An embodiment is described hereunder in some detail with reference to and is illustrated in the accompanying drawings in which:

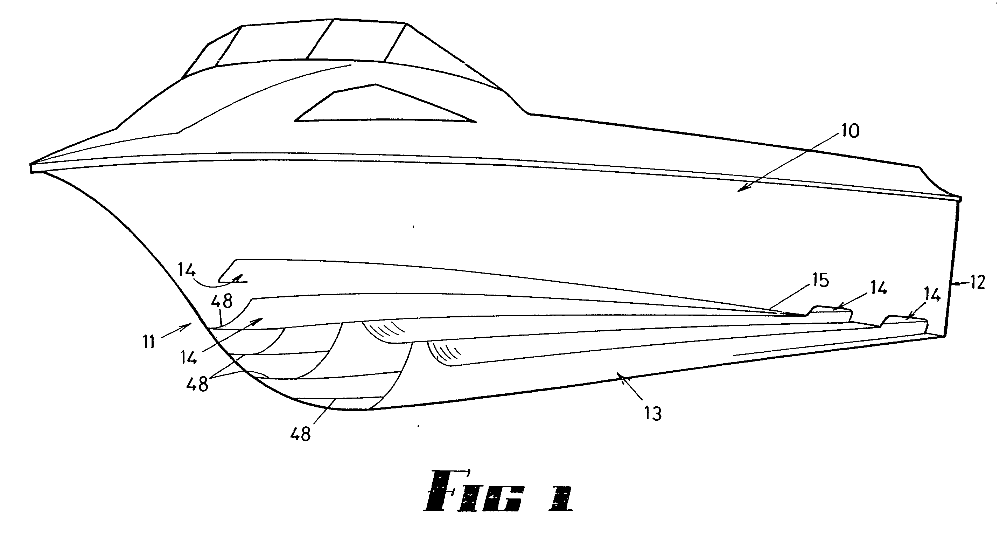

Fig. 1 is an elevational perspective view of a hull according to this embodiment;

Fig. 2 is an elevation of the forebody shown Fig. 1, Figs. 2a, 2b and 2c showing part sectional profiles at a-a, b-b and c-c on Fig. 2;

Fig. 3 is a part underside view of Fig. 1;

Fig. 4 is a diagrammatic longitudinal section showing the compartment arrangement and the recess walls;

Fig. 5 is a section taken on line 5-5 of Fig. 3;

Fig. 6 is a rear elevation showing the transom, and

Fig. 7 is a view showing an alternative layout.

## DETAILED DESCRIPTION OF THE PREFERRED EMBODIMENT

In the drawings, only single lines are used since these are all that are required for illustrating the invention.

A hull 10 comprises a forebody 11, a transom 12, and a bottom 13 extending therebetween.

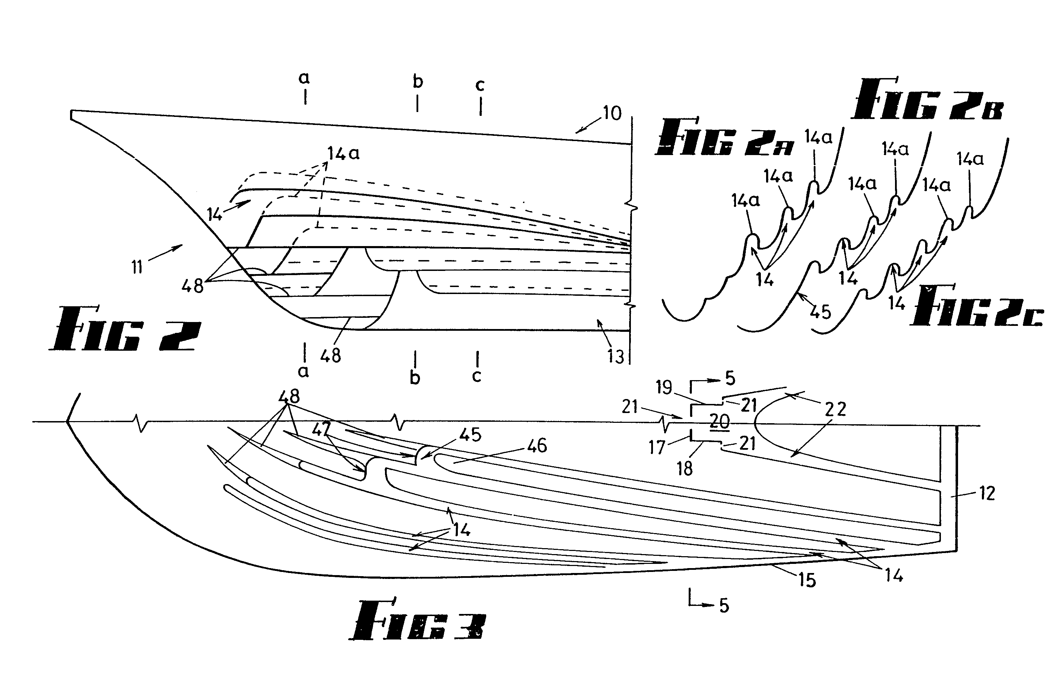

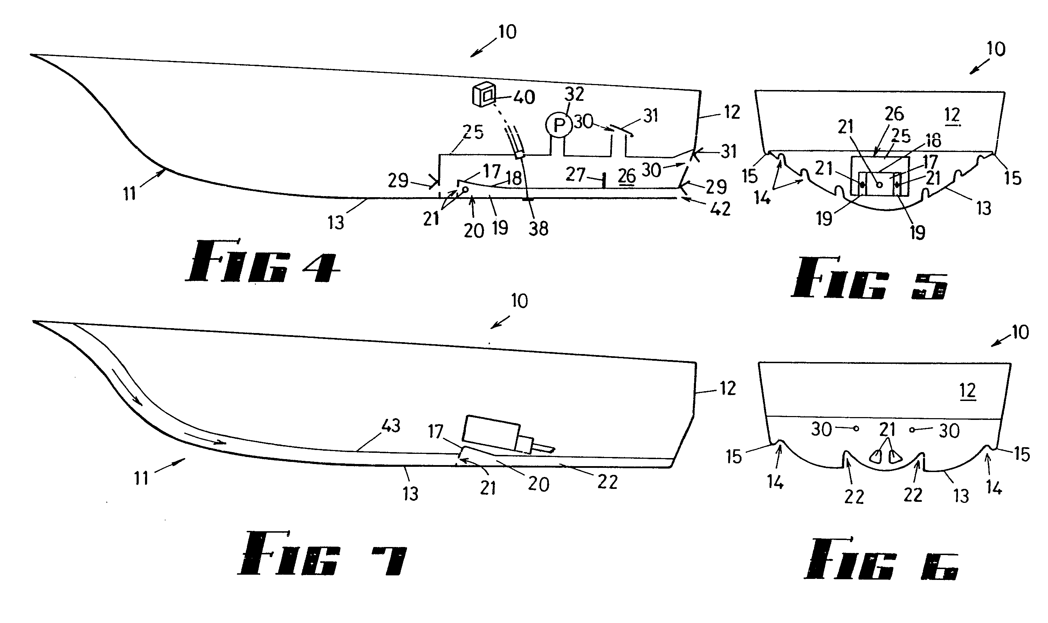

As in the aforesaid Australian Patent Application No. 50872/85, the bottom 13 is provided with a plurality of channels 14 which diverge rearwardly. On each side, the two uppermost channels 14, which are well above the waterline, diminish in depth rearwardly and terminate about halfway along the hull. Two intermediate channels 14 extend from the forebody and open at their rear ends to the chines 15. The innermost channel 14 opens to the transom 12. The channels are not shown in Figs. 4 or 7.

At the locality of the section line 5/5, the walls 17, 18 and 19 extend upwardly into the hull from the bottom 13 and define a recess 20. The wall 17 is a rearwardly facing wall and that wall contains an aperture 21 which is in an area of the hull bottom 13 likely to be a low pressure area in any case, but in being a rearwardly facing wall in the recess 20 it is in an even lower pressure area. The aperture 21 is situated as low as possible to allow a large volume of air to be trapped in the recess above the aperture. Additional apertures 21 are situated in laterally extending stepped portions of walls 18 and 19 to allow greater air flow. The recess forms the forward end of a V-shaped channel 22 which is similar to the channels 14 in cross-sectional shape, and diverges rearwardly to open to the transom 12 as seen best in Fig. 2, allowing a free through flow of water from the channel. The stepped portions containing apertures 21 are forward of the V-shaped channel 22. The outer walls of channel 22 contain still further air apertures 21 (Fig. 4), which are immediately adjacent vertical steps located at the point of commencement of channel divergence.

The hull contains compartment walls 25 which surround and overlie the walls 17, 18 and 19 so that the aperture 21 opens into the compartment 26. This compartment contains a baffle 27 which inhibits fore-and-aft water movement in compartment 26 and has drainage holes 28 which can be closed by valve means 29 (shown only diagrammatically). Transom 12 contains air entry apertures 30 closable by valves 31, but when open allow air into or out of the compartment 26. Only one valve 31 needs to be installed. An air pump 32 is effective in expelling water from compartment 26 (if required). When the hull is in motion in the water, the water contained in compartment 26 will drain.

With this arrangement, the effective mass of the craft is reduced when the craft is in motion but increased when the compartment 26 is filled with water, that is, when the vessel is at rest. If the valves 31 are closed when the compartment 26 is empty, the air can be trapped within the compartment and the effective draft of the vessel can be substantially reduced at low speeds.

In many boats, use is made of transducers, earthing plates for radios and the like, and by having for example a transducer 38 in the hull bottom, the problems of sealing are removed, the transducer 38 being connected by a cable 39 to an a echo sounder 40 routed via a tube with the upper opening above the waterline (shown only diagrammatically in Fig. 4).

Reference is made to Fig. 7 when using power units other than an outboard, increased weight forward must generally be carried as in the case of a stern drive or inboard motor, thus needing more buoyancy, and these units would be mounted as shown in Fig. 7, in the same general position as compartment 26. To cope with these requirements, the compartment 26 can be eliminated and the airflow to aperture 21 in recess 20 can be delivered via a pipe 43 following the path of the stem and the keelson. As well as providing the air flow required, the pipe also acts as a structural member to strengthen the forward portion of the hull.

Reference is now made to the shape and configuration of the channels 14, referred to above.

The dotted lines 14a in Fig. 2 illustrate the upper-limits of channels 14, and show how the upper three channels increase in depth at their front ends, to provide "air entrapment" means which will reduce water-hammer in the channels which are only intermittently submerged.

The lower channels 14 however are more often submerged (although their front ends constitute air entry means). At, or near, the front ends of channels 14, their outer side walls are interrupted to provide "exit paths" 45 for forwardly moving water, which will move outwardly and upwardly from the inner, lower channels 14 to those above them. For these paths to be effective, they should be oriented as shown in Fig. 2 to direct water flow rearwardly into the outer channels. Each front end 46 of the rearwardly extending channel walls approximates the shape of a quarter sphere, but the rearward facing walls 47 are concave in plan such that in conjunction with end 46, a non-constrictive path is formed between adjacent channels. Additional exit paths per channel exist further aft in some instances. Extensions 48 of the four inner, lower channels 14 comprise short, narrow triangular lands 48, which assist in deflecting the bow wave outwardly at the forefoot.

In all instances, the channels 14 are arranged to be symmetrical with respect to a central longitudinal plane of the boat hull 10, and to diverge rearwardly at an angle thereto not less than 3° nor more than 45° (that is, 7° and 90° inclusive respectively).

Any suitably shaped hull can have its sea keeping characteristics modified by modifying the shapes and divergence of the channels. For example, more channel area near the after end will provide more dynamic lift at that end, increase the wetted area of the hull, and reduce the trim angle (requirements for ocean going vessels).

Softness of ride is obtained when the trim attitude of the hull is such that the top of the front end of one or more pairs of channels is lower than the top of the rear of those channels.

Positioning the lowermost channel pair 14 and therefore also pair 22 towards the stern provides a greater bias of lift to the rear so that the whole boat rides high at the stern when at speed. The channels will then slope upward to the rear.

By increasing the cross-section of one or more pairs of channels going from front to rear, the top of the downwardly concave surface rises to the stern. As this reduces lift efficiency at higher speeds, this technique is best used on channels which are not constantly in contact with the water (i.e. not the lowest channel pair 14) when in motion.

## Claims

1. A marine hull having a forebody, a transom, and a bottom extending therebetween, the bottom comprising walls defining a plurality of upwardly formed channels between the forebody and the transom, and characterised by: said channels diverging in a rearward direction, air entry means near the front end of each said channel, and the rear ends of at least some of said channels opening at a peripheral edge of said bottom whereby water in those channels is free to discharge therefrom in a rearward and outward direction.

2. A marine hull according to claim 1, further characterised in that, the bottom comprises recess walls defining an upwardly extending recess therein, said recess walls extending into the hull, and located between the forebody and transom of the hull, an air flow aperture through a said recess wall, and further walls within the hull defining a passageway for air flow to the aperture.

3. A marine hull according to claim 2 further characterised in that said recess walls include a rearwardly facing wall, said air flow aperture being in said rearwardly facing wall.

4. A marine hull according to claim 2 further characterised by said bottom of the hull comprising surfaces which define a pair of channels which diverge rearwardly from the upwardly extending recess, a rearwardly facing wall within said recess and upstanding from the bottom, said air entry means for that pair of channels comprising an aperture in the lower part of said rearwardly facing wall such that a volume of air may be trapped in the upwardly extending recess above the horizontal level of said aperture.

5. A marine hull according to claim 4 further characterised in that said pair of channels diverging from the recess open to the transom.

6. A marine hull having a forebody, a transom, and a bottom extending therebetween, an aperture in the bottom, and characterised by recess walls within the hull near its transom, peripheral edges of said recess walls being sealed with respect to the hull and defining a compartment located over the aperture, said recess walls defining an air flow passageway, the location of the aperture and air flow passageway being such that, when the hull moves through water, water if in the compartment drains through the aperture and thereafter air flows through the aperture and discharges beneath the hull near the transom end thereof.

7. A marine hull according to claim 6 further characterised in that an upper or rearward portion of said compartment comprises an air opening, and valve means associated with the opening control air flow into or out of the compartment.

8. A marine hull according to claim 6 or claim 7 further characterised in that said bottom comprises walls extending into the compartment defining an upwardly extending recess, said walls including a rearwardly facing wall, said aperture being in that rearwardly facing wall.

9. A marine hull according to any preceding claim further characterised in that said channels include inner, lower channels and outer, upper channels, said channels extending rearwardly and outwardly in plan with reference to a central longitudinal plane of the hull, and said channel walls, which separate them, include interrupted portions which define paths for fluid flow between the inner, lower channels and adjacent outer, upper channels.

10. A marine hull according to any preceding claim further characterised in that at least some of said channels have greater depth in the vicinity of their forward ends than rearwardly thereof.

11. A marine hull according to any preceding claim further characterised in that the angle of divergence of the channels from a central longitudinal plane of the hull exceeds $3\degree$ but does not exceed $45\degree$.

12. A marine hull according to any preceding claim further characterised by having means to adjust the horizontal attitude of the hull in motion such that the height of the forward end of one or more said channels is lower (less) than the height of the rearward end of said channels.

13. A marine hull according to any preceding claim further characterised by a plurality of channels extending rearwardly while diverging in plan, the top surfaces of said channels rising rearwardly in elevation when referenced to the waterline of the hull when in motion.

14. A marine hull according to claim 1 further characterised by walls in said hull bottom which define a pair of channels diverging from a laterally central location towards the rear of the hull and opening to the transom, and a conduit extending upwardly from that central location and opening to air at its upper end and to those channels at its lower end.

FIG 1

EP 0 341 359 A1

FIG 2a

FIG 2b

FIG 2c

FIG 2

FIG 3

14a 14a 14a 14a 14a 14a

14 14 14 45

a b c

10 13 11 48 14

12 22 21 20 21 19 17 18 21 5

14 15 5

46 45 47 48 14

FIG 4

FIG 5

FIG 6

FIG 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 708 085 (BLEE) <br> * Column 3, line 29 - column 4, line 4; figure 6 * | 1,11,13 | B 63 B 1/38 |
| Y | | 2-5,10, 14 | |
| Y | AU-B- 37 591 (STOLK)(1972) <br> * Page 3, line 16 - page 8, line 3 * | 2-5,10, 14 | |
| A | | 6,8,11 | |
| X | US-A-3 547 064 (GLASS) <br> * Column 2, line 20 - column 4, line 23 * | 1,10-13 | |
| X | FR-A-2 522 556 (PIMOULE) <br> * Figures 1,2 * | 1,13 | |
| X | EP-A-0 088 640 (IKEDA) <br> * Figures 5-10B * | 6,7,10, 14 | |
| A | | 1-5,8 | |
| X | US-A-3 316 874 (CANAZZI) <br> * Figures 1-5 * | 6-8 | TECHNICAL FIELDS SEARCHED (Int. Cl.4) |
| A | | 2,3 | B 63 B |
| X | WO-A-8 701 350 (SMALL) <br> * Figures 1-6; abstract * | 6 | |
| A | | 2,3,5,8 | |

The present search report has been drawn up for all claims

| Place of search | Date of completion of the search | Examiner |
|---|---|---|
| THE HAGUE | 09-12-1988 | HUNT A.E. |